# EUROPEAN PATENT APPLICATION

(11) **EP 2 096 595 A2**
(43) Date of publication of application: **02.09.2009**
(21) Application number: 09153202.8
(22) Date of filing: 19.02.2009
(51) Int. Cl.: G06Q 30/00

(54) **Identifying indeterminacy for activity-based advertising**

(30) Priority: 04.04.2008 US 62698; 28.02.2008 US 32421 P
(71) Applicant: Palo Alto Research Center Incorporated, Palo Alto, California 94304 (US)
(72) Inventor: Greene, Daniel H., Sunnyvale, CA 94087 (US); Partridge, Kurt, Palo Alto, CA 94306 (US); Begole, James, San Jose, CA 95129 (US)
(74) Representative: Grünecker, Kinkeldey, Stockmair & Schwanhäusser Anwaltssozietät

(57) **Abstract**

One embodiment of the present invention provides an activity-based advertisement system that identifies customer indeterminacy. During operation, the system receives a number of trajectories of a customer, and identifies an indeterminacy point based on the trajectory patterns. The system then determines one or more receptive opportunities for presenting advertisements based on the indeterminacy point. The system further presents one or more advertisements to the customer during a period corresponding to the receptive opportunity.

## Description

### BACKGROUND

This disclosure generally relates to advertising systems. In particular, this disclosure relates to an activity-based advertising system that facilitates identification of customer indeterminacy.

The ubiquitous Internet connectivity coupled with wide deployment of wireless devices is drastically changing the advertising industry.
Of the $385 billion spent globally on advertising in 2005, online and wireless spending accounted for $19 billion. Internet advertising was the fastest-growing form of advertisement, with a cumulative annual growth rate of 18.1 percent. However, Internet advertising has its limitations, and new opportunities remain to be discovered to sustain the dramatic rate of growth in new media advertising.

Existing Internet advertisements only work when a user is online and watching a computer screen. Traditional advertising, in contrast, comes in many forms. For example, signs can advertise products inside retail stores. Radio programs can advertise products when the listener engages in a wide variety of activities. Printed advertisements can appear anywhere paper is used, from newspapers, to flyers, receipts, and ticket stubs. Although Internet advertising surpasses traditional advertising in its ability to better target consumer interest, it still cannot be closely tailored to human activities.

Delivering activity-based advertisements to a customer's mobile device is a new technique that compliments the conventional advertising methods. Activity-based advertising can better target a customer's needs and dynamically adjust to a customer's activity. In such systems, it is important for the system to identify occasions where a customer is most likely to be influenced by advertisements, so that the system can deliver advertisements more effectively.

### BRIEF DESCRIPTION OF THE FIGURES

FIG. 1 illustrates an exemplary architecture for a receptive-opportunity-based advertising system that facilitates identification of customer indeterminacy, in accordance with an embodiment of the present invention.

FIG. 2 presents a block diagram illustrating an exemplary mode of operation of a receptive-opportunity-based advertising system, in accordance with an embodiment of the present invention.

FIG. 3A presents an exemplary trajectory pattern of a customer, in accordance with one embodiment of the present invention.

FIG. 3B presents an exemplary trajectory pattern of a customer, in accordance with one embodiment of the present invention.

FIG. 4 presents a flowchart illustrating an exemplary process of identifying a customer indeterminacy point, identifying a receptive opportunity, and presenting advertisements, in accordance with an embodiment of the present invention.

FIG. 5 illustrates an exemplary computer system that facilitates an advertising system with customer indeterminacy identification, in accordance with an embodiment of the present invention.

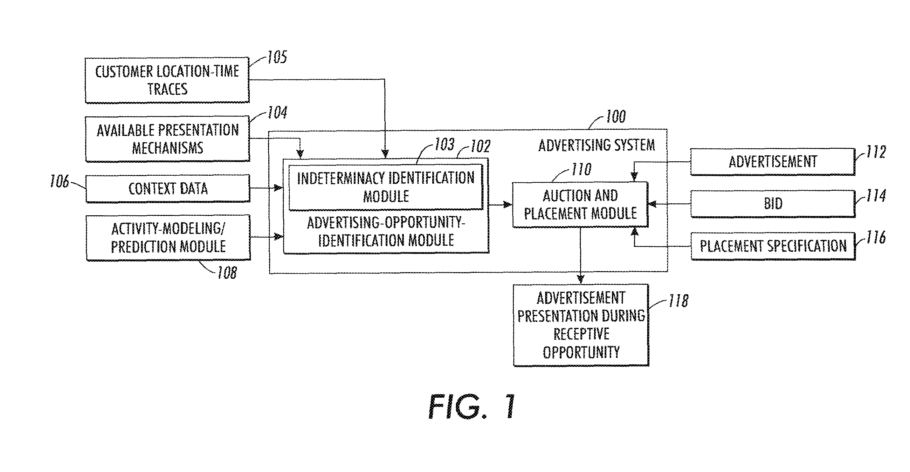

In the drawings, the same reference numbers identify identical or substantially similar elements or acts. The most significant digit or digits in a reference number refer to the figure number in which that element is first introduced. For example, element 102 is first introduced in and discussed in conjunction with FIG. 1.

### SUMMARY

One embodiment of the present invention provides an activity-based advertisement system that identifies customer indeterminacy. During operation, the system receives a number of trajectories of a customer, and identifies an indeterminacy point based on the trajectory patterns. The system then determines one or more receptive opportunities for presenting advertisements based on the indeterminacy point. The system further presents one or more advertisements to the customer during a period corresponding to the receptive opportunity.

In a variation of this embodiment, a respective trajectory comprises a trace of a customer's location. Furthermore, the trace indicates the time when the customer is at different locations and venues associated with different locations.

In a variation of this embodiment, identifying the indeterminacy point involves determining a diverging point among the trajectories and determining whether the divergence among the trajectories at this diverging point is sufficiently uncertain and greater than a predetermined threshold.

In a further variation, the system identifies correlation between two or more diverging trajectories and other context, events, or activities that makes the divergence predictable, and excludes such correlated trajectories from being considered for the indeterminacy point.

In a variation of this embodiment, the indeterminacy point can correspond to different activity hierarchies.

In a variation of this embodiment, the system receives contextual information for the customer. In addition, identification of indeterminacy point is further based on the contextual information.

In a further variation, the contextual information includes one or more of: time of day, day of week, weather condition, content of the customer's calendar, messages, and emails, accelerometer and/or gyroscope traces, and traffic condition. In one embodiment of the computer system of claim 15, a respective trajectory comprises a trace of a customer's location; and
wherein the trace indicates the time when the customer is at different locations and venues associated with different locations.
In a further embodiment while identifying the indeterminacy point, the indeterminacy-identification mechanism is configured to:
determine a diverging point among the trajectories; and
determine whether the divergence among the trajectories at this diverging point is sufficiently uncertain and greater than a predetermined threshold.
In a further embodiment the computer system further comprises a correlation-identification mechanism configured to:
identify correlation between two or more diverging trajectories and other activities or context; and
exclude such correlated trajectories from being considered for the indeterminacy point.
In a further embodiment the indeterminacy point can correspond to different activity hierarchies.
In a further embodiment the receiving mechanism is further configured to receive contextual information for the customer; and
wherein the identification of indeterminacy point is further based on the contextual information.
In a further embodiment the contextual information comprises one or more of:
time of day;
day of week;
weather condition;
speed of motion;
amount of time spent at the indeterminacy point;
content of the customer's calendar, messages, and emails;
accelerometer and/or gyroscope traces; and
traffic condition.

### DETAILED DESCRIPTION

The following description is presented to enable any person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the spirit and scope of the present invention. Thus, the present invention is not limited to the embodiments shown, but is to be accorded the widest scope consistent with the principles and features disclosed herein.

Embodiments of the present invention provide an advertising system that presents advertisements based on receptive opportunities with respect to a customer's activities.

In particular, this system can identify a customer's indeterminacy with respect to purchase choices, and use this information to further identify opportunities for presenting well-focused advertisements. In one embodiment, the system targets advertising to mobile customers (e.g., via cell phones, personal digital assistants (PDAs), and in some cases nearby electronic billboards), and delivers activity-targeted advertising that can influence the customer's future purchase behavior. For example, the system can obtain a customer's activity trajectory, which can include a location-time trace with indications of different venues along the trace, and the customer's current contexts. The system then predicts that the customer usually visits one of several restaurants after leaving the train on the way back from work. The system then identifies that a good opportunity for presenting restaurant-related advertisements arises while the customer is waiting for the train, and presents the customer with relevant and useful advertising.

Generally, some human activities follow established patterns, while other human activities are highly unpredictable. In the above example, knowledge about a customer's indeterminacy, i.e., the knowledge that the customer is undecided which restaurant to visit, is valuable to advertisers, because such indeterminacy provides an opportunity to influence the customer's purchase behavior. For example, it may be predictable where a commuter is traveling every weekday morning, but quite unpredictable what that same commuter will do after work or on a Saturday morning. In this disclosure, the latter situation is referred to as indeterminacy. Indeterminacy describes a branching or divergence point in activity where a customer may be open to influence by advertising. For instance, it may be far more effective and valuable for an advertiser to influence the customer's choice of activity at a point of indeterminacy, such as when he has arrived at the destination train station, although the presentation of advertisement may precede or follow the point of indeterminacy, such as when the customer is waiting for the train or riding in the train.

This disclosure uses the following terminologies:

*Advertiser.* This term typically refers to a company wishing to advertise its service or products. This disclosure uses the terms "advertiser" and "advertisement broadly to refer to content provider and content, where, for example, the content provider is willing to pay to have targeted content delivered to customers, even if that content does not advertise a specific service or product. The typical advertiser would like to maximize profit, where advertising is one of the costs. For this reason, well targeted advertising is more effective for advertisers.

*Customer.* This term refers to a recipient of the advertising - a potential customer of the advertisers. Customers typically welcome some advertisements but prefer not to receive other kinds of advertisements. For this reason, well targeted advertising is more acceptable for customers. This disclosure uses the term "customer" broadly to include people who receive content, even if that content is not meant to include to the person as a customer of the advertiser.

*Provider.* This term refers to the provider of the service that delivers advertisements to customers. The provider is responsible for delivering well targeted advertising. Embodiments of the present invention provide the technology that a provider can use to deliver advertisements based on a customer's activity and context. In some embodiments, there can be a separate *publisher* who provides the channels for presentation to the customer. The *provider* can choose the advertisements and the publisher's channel, and, depending on the payment mechanism, charges the advertiser and rewards the publisher.

*Presentation.* This term refers to the showing of an advertisement to a customer. Note that embodiments of the present invention are independent from the form of the presentation. Presentation might include adding a banner or pop-up to a PDA or cell phone, playing an audio message by phone, music player, or car stereo, modifying a map on a GPS navigation device, or changing a billboard near the customer.

*Payment.* This term refers to the amount an advertiser pays the provider after a "successful" presentation. Successful presentations can be defined in many different ways. Correspondingly, the payment can also be structured differently. It could be pay-per-presentation, pay-per-click, or pay-per- action (a form of commission defined by the advertiser). In one embodiment, a new pay-per-confirmed-prediction payment structure is used for activity-based advertising.

*Activity.* This term refers to the activity of the customer. For example, a customer's activity might be "walking towards a train station." The activity can be described at different semantic levels. For example, "walking towards a train station" might also be described as "commuting home after work." In the advertising system in accordance with some embodiments, the activity may be partially described with objectives, such as "to obtain exercise," tools, such as "with a bicycle," skill levels, such as "expert," and other modifers/qualifiers of the activity. Activity-targeting or activity-based advertising may rely on complete or partial descriptions on different semantic levels to facilitate reaching large numbers of relevant activities.

*Context.* This term refers to additional information surrounding the customer's activity. For example, the activity might be occurring on a rainy day. In some embodiments, both the activity description and the context description are used for activity-based presentation of advertisements. Note that the term "context" is often used in conjunction with terms related to activities. The terms "activity," "activity targeting," and "activity-based advertising" are typically used in a way that involves features of the activity as well as possible additional context for targeting the advertising.

*Opportunity.* Also referred to as "advertising opportunity," "presentation opportunity," or "receptive opportunity," this term refers to a time window identified by the adverting system during which selected advertisements can be presented to a customer.

*Indeterminacy.* This term refers to a branching or diverging point in a customer's activity pattern, where he is undecided about the next activity. An indeterminacy point can be associated with different levels or hierarchies of activity. For example, a customer can be undecided about what to do next, where his choices are to eat, to shop, to see movies, etc. A customer can also be undecided about where to go after he has decided what to do, which also presents an indeterminacy point. For example, a customer has decided that he wants to eat, but remains undecided which restaurant to take. This situation also presents an indeterminacy point.

Embodiments of the preset invention provide a mechanism for identifying points of indeterminacy, which can facilitate effective advertising. Note that the best time to present the advertising, i.e., the "presentation opportunity" or "receptive opportunity," may be well in advance of the point of indeterminacy, rather than at the point of indeterminacy itself.

In some embodiments, the provider's system uses historical data on the customer's activity to identify branching points. Such historical data can include a location-time trace produced by a customer's mobile device, which is equipped with global positioning system (GPS) capability. In one embodiment, a customer's mobile device can upload its GPS trace to a provider's system. The provider's server then maps the trace to a venue map and learns which venues, such as shops, parks, restaurants, office buildings, etc., the customer has been to as well as how much time he has spent in each venue and traveling between the venues. Based on such information, the provider's system can reconstruct a customer's activity trajectories. After obtaining the customer's activity trajectories, the system then determines where these trajectories diverge. These diverging points are then labeled as indeterminacy points, which the system can use to identify advertisement presentation opportunities. In some cases, several activity trajectories following a diverging point might briefly share some common pattern, even though they will eventually diverge. That is, the trajectories form a tree topology and can exhibit more than one branching point. In these cases, in accordance with some embodiments, the system can associate all these branching trajectories with a common point of indeterminacy that corresponds to the first branching point in the trajectory tree.

FIG. 1 illustrates an exemplary architecture for a receptive-opportunity-based advertising system that facilitates identification of customer indeterminacy, in accordance with an embodiment of the present invention. In this embodiment, an advertising system 100 includes an advertising-opportunity-identification module 102 and an auction and placement module 110. Advertising-opportunity-identification module 102 includes an indeterminacy identification module 103. Advertising-opportunity-identification module 102 is in communication with available presentation mechanisms 104 and receives context data 106, which indicates the current context the customer is in, and customer location-time traces 105 from a customer's mobile device. In addition, or optionally, advertising-opportunity-identification module 102 is in communication with an activity-modeling/prediction module 108, which predicts or derives the customer's activities based on customer context data 106.

In one embodiment, indeterminacy identification module 103 identifies one or more diverging points in the trajectories derived from customer location-time traces 105. Based on these diverging points, indeterminacy identification module 103 identifies the indeterminacy points. Subsequently, advertising-opportunity-identification module 102 identifies one or more presentation opportunities based on the indeterminacy points, available presentation mechanism 104, and optionally context data 106. Note that the time of a presentation opportunity is often before the time corresponding to an indeterminacy point, because the best time for presenting advertisements is usually before the customer has to decide what to do next.

Auction and placement module 100 then receives a bid 114 from an advertiser for a particular advertisement presentation opportunity. Together with bid 114, an advertiser can also send an advertisement 112 and a placement specification 116 to auction and placement module 110. Placement specification 116 specifies the advertiser's preferences for presentation, and can include specifications for one or more of: the targeted activity, the indeterminacy, and/or the presentation opportunity. After an advertiser's bid is selected, advertising system 110 then provides the corresponding advertisement presentation 118 during a receptive opportunity to a customer's mobile device.

The architecture illustrated in FIG. 1 is only one possible embodiment of the advertising system. In one embodiment, presentation mechanisms 104 can include a variety of devices that can present an advertisement. Such devices can include a mobile phone, PDA, computer, public display, radio, TV, in-vehicle navigation system, etc.

Furthermore, context data 106 can include different types of information that can be used to determine the customer's past, current, or future activities. Such information can include physical information such as time of day, day of week, weather condition, the customer's location, speed of motion, etc. Context data 106 can also include logical contents pertaining to the customer, such as the content of the customer's calendar, instant messages, and emails, history of the customer's past activities, and the customer's previous response to advertisements. In one embodiment, context data 106 can be collected by a mobile device, such as a cell phone, carried by the customer.

In one embodiment, activity-modeling/prediction module 108 uses context data 106 to derive past, current, and/or future activities associated with a customer. For example, the customer's cell phone can be equipped with a GPS receiver. Based on pre-stored venue information and the traces of the customer's locations at different times, activity-modeling/prediction module 108 can determine that at a certain time of day the customer typically engages in a particular activity. Note that activity-modeling/prediction module 108 can reside within the customer's mobile device, or within advertising system 100.

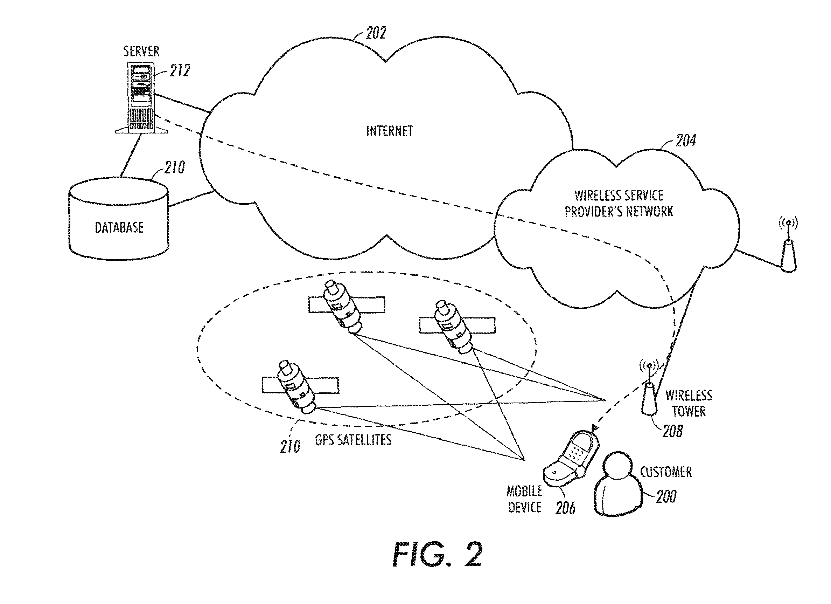

FIG. 2 presents a block diagram illustrating an exemplary mode of operation of a receptive-opportunity-based advertising system, in accordance with an embodiment of the present invention. In this example, a customer 200 uses a mobile device 206, which can be a smart phone. Mobile device 206 is equipped with GPS capability, and is in communication with GPS satellites 210. Mobile device 206 is also in communication with a provider's server 212 via a wireless tower 208, a wireless service provider's network 204, and the Internet 202. During operation, provider's server 212 receives GPS location-time traces from mobile device 206, and reconstructs customer 200's activity trajectories based on the venue information stored in a database 210. Mobile device 206 also collects a set of context data, such as customer 200's calendar content, the current time, etc., and communicates this context data to server 212.

Based on the trajectories and customer 200's context data, server 212 identifies one or more indeterminacy points. For example, server 212 can determine that at approximately 6pm on every weekday, customer 200 typically goes to a restaurant for dinner after a train ride from work. The location of the destination train station and the corresponding time when customer 200 gets off the train becomes an indeterminacy point for selecting a restaurant for customer 200.

Based on the activity, indeterminacy point, and context information, provider's server 212 determines that a good receptive opportunity arises when customer 200 is waiting at the train station and riding in the train. Correspondingly, provider's server 212 retrieves from database 210 bids whose placement specification indicates that they are appropriate for the activity, indeterminacy, and/or the receptive opportunity, and selects the winning advertisements. Note that this selection process can be configured to meet the provider's needs. For example, the provider can select presentations with the highest bid for the topics associated with the opportunity description, or the presentations that are the closest match to the customer needs. In one embodiment, server 212 can also compute a discount to the advertiser based on the predicted quality of the opportunity with respect to the presentation.

Server 212 then communicates the advertisements and instructions on how to present these advertisements to mobile device 206. In one embodiment, the advertisements can be streamed video, audio, graphics, text, or a combination of above. After receiving the advertisements, mobile device 206 presents these advertisements based on the instructions. Note that other presentation mechanism can also be used. For example, the presentation mechanism can be a nearby LCD display installed in the train. The LCD display can be equipped with some communication mechanism, such as Bluetooth, to communicate with mobile device 206. During the presentation, mobile device 206 can stream the advertisements to the LCD display, so that customer 200 can view the advertisements more easily on a bigger screen.

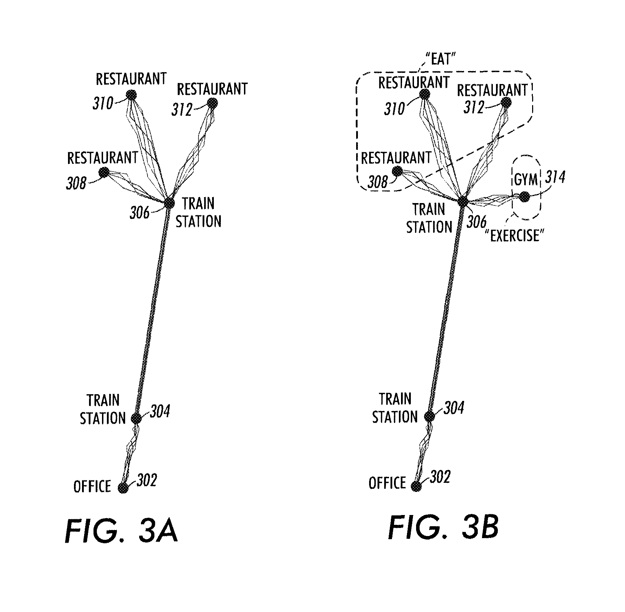

FIG. 3A presents an exemplary trajectory pattern of a customer, in accordance with one embodiment of the present invention. In this example, the customer usually leaves his office 302 in the evening and walks to a train station 304. After waiting for a period of time at train station 304, the customer takes a train ride and gets off at train station 306. Subsequently, the customer would go to one of three restaurants 308, 310, and 312. There is no particular pattern as to how the customer chooses the restaurant. Hence, in this example, the time when the customer arrives at train station 306 is an indeterminacy point.

Since the GPS trace has limited accuracy, and the customer may from time to time wander off from his normal route, the system can use some form of approximate geometric matching to ensure that noisy location data is not mistaken for branching points. In one embodiment, the system can compute an average trajectory over a number of traces to identify branching points.

Note that various devices can be used to generate the traces. For example, the GPS traces can be generated by a customer's GPS navigator placed in a vehicle. The GPS navigator can directly transmit the GPS data to the provider's system via a wireless network. Alternatively, the GPS navigator can send the GPS data to the customer's mobile device via, for example, Bluetooth, and the mobile device can then send the GPS data to the provider's system. Other communication mechanism and configurations are possible.

The provider's system can measure the degree of uncertainty at the branching point. Note that uncertainty measurement can be based on not only the location difference between different trajectories, but also the time (which includes time of day, day of week, month, season, etc.) associated with each trajectory. In one embodiment, the system measuring uncertainty by computing the entropy of the trajectories. In addition, to identify the point of indeterminacy, the provider can further apply a threshold to the measure of uncertainty and then label the branching point as indeterminate if it is sufficiently uncertain. In some embodiments, the advertisers can bid directly for some desired level of measured indeterminacy.

Note that some patterns of activity might be falsely identified as indeterminate because the system does not recognize the pattern. For example, if a customer eats lunch regularly at the same restaurant on Tuesdays and Thursdays, but eats in the cafeteria on other days, then this is not a true point of indeterminacy, even if the system sees a branching of activity at lunch time. To address this problem, the system can include a library of hypotheses that can be applied to describe branching behavior of the customer. For example, the system can measure the entropy of lunch-time activity conditioned on the hypotheses that the day of the week predicts the activity. The system can grow the list of hypotheses based on evidence of false positives. In other embodiments, the system can reduce false indeterminacy points by evaluating the time correlation between trajectories. For example, if the time of the customer being at the same restaurant from multiple trajectories points to the same day of week, then the system can conclude that the customer always goes to that restaurant on certain days, and the corresponding branching point on the trajectories should not be taken as indeterminacy points.

In further embodiments, the system can identify partial indeterminacy. Partial indeterminacy occurs, for example, when it is almost certain that a customer will visit a restaurant, but remains indeterminate about which restaurant will be visited. The system can identify such partial indeterminacy points based on a hierarchy in the activity specification language. Correspondingly, the advertisers can bid on higher-level generalizations, such as "customer will exercise," while at the same time be bidding on indeterminacy in the exact activity, such as "playing basketball."

FIG. 3B illustrates an example of identifying a partial indeterminacy point. In this example, after getting off a train at train station 306, the customer always goes to a gym 314 to exercise on Tuesdays and Thursdays, which corresponds to the activity "exercise." He also goes to one of the restaurants to eat dinner on other weekdays, which corresponds to the activity "eat." Although these two activities diverge at the branching point corresponding to train station 306, this branching point is not an indeterminacy point with respect to the activities "eat" and "exercise." However, this branching point is an indeterminacy point at a lower activity hierarchy, which is associated with different restaurant choices under the activity "eat." Therefore, the system can still identify a good opportunity to deliver restaurant-related advertisements to the customer when he is waiting for the train at train station 304, or when he is riding the train toward train station 306.

Note that predicting indeterminacy can be a data intensive task. Only a few samples of a customer's activity might not be sufficient to predict indeterminacy. In one embodiment, the system can rely on various kinds of prior information to identify indeterminacy points with new customers.

The aforementioned general mechanism for identifying a point of indeterminacy could be used for applications other than advertising. In general, this mechanism identifies prefixes of previous behaviors that match a user's current situation. Knowing when the next major point of indeterminacy will arise can facilitate a number of applications, such as (1) to choose appropriately-timed media segments for consumption before that indeterminacy point, (2) to predict whether the user may next be available for an interruption, and (3) to reduce power consumption by shutting down devices until the next indeterminacy point.

Another extension of this mechanism is to use context sensors in addition to location to determine the customer's progress toward a point of indeterminacy. Information from emails, SMS messages, Instant Messages, accelerometer and gyroscope traces, weather, time of day, traffic, and many other sources could be helpful in determining whether the customer has reached a point of indeterminacy, or if he is at an intermediate step preceding a point of indeterminacy.

A further extension to this mechanism is for the system to search for points of confluence in addition to points of indeterminacy. These confluence points would likely be points in the customer's predicted future trajectory that is joined by other trajectories to form a common subsequent trajectory. Confluence points could be used to assist the prediction of the eventual goal if the customer's current trajectory is rare or unknown. For example, if the customer is visiting a friend's house for the first time, and they then head toward the freeway, the system might infer that they are headed home, because their most common use of the freeway, past the confluence point of the onramp, is to go home. The system can make this inference even if the customer has never traversed the path to the freeway onramp.

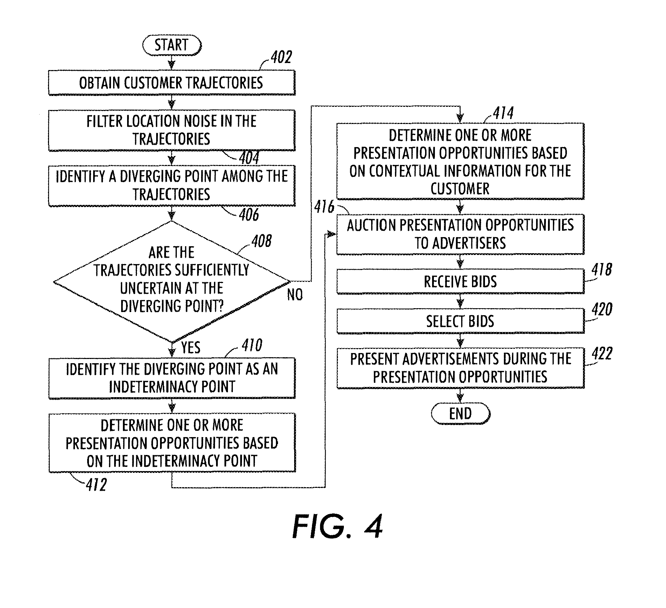

FIG. 4 presents a flowchart illustrating an exemplary process of identifying a customer indeterminacy point, identifying a receptive opportunity, and presenting advertisements, in accordance with an embodiment of the present invention. During operation, the system first obtains a set of customer trajectories (operation 402). The system then filters the location noise in the trajectories (operation 404). The system further identifies a diverging point among the trajectories (operation 406).

Next, the system determines whether the trajectories are sufficiently uncertain at the diverging point (operation 408). If so, the system identifies the diverging point as an indeterminacy point (operation 410). The system further determines one or more presentation opportunities based on the indeterminacy point (operation 412). The system then proceeds to auction the presentation opportunities to the advertisers (operation 416).

If the trajectories are not sufficiently uncertain, the system determines that the diverging point is not an indeterminacy point and proceeds to determine one or more presentation opportunities based on contextual information for the customer (operation 414).

The system then auctions the presentation opportunities to the advertisers (operation 416). In response, the system receives a number of bids (operation 418). After selecting the winning bids (operation 420), the system presents the corresponding advertisements during the presentation opportunity (operation 422).

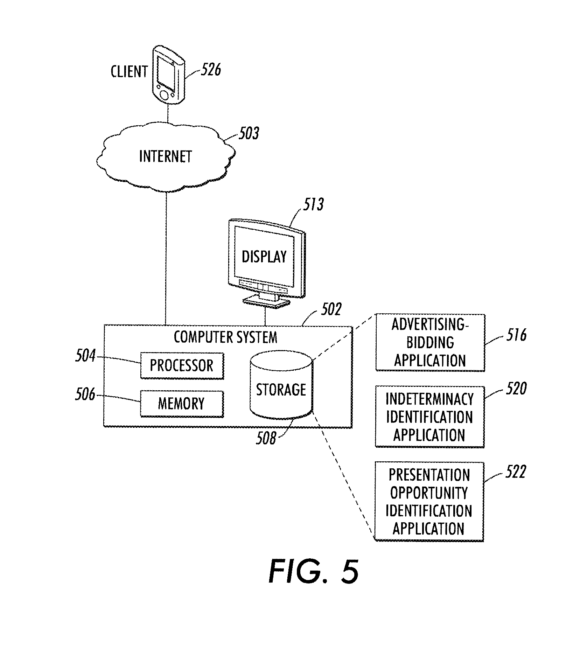

FIG. 5 illustrates an exemplary computer system that facilitates an advertising system with customer indeterminacy identification, in accordance with an embodiment of the present invention. In this example, computer system 502 performs the functions of a provider. Via Internet 503, computer system 502 is in communication with a client 526, which in one embodiment can be a PDA or cell phone with GPS capability.

Computer system 502 can include a processor 504, a memory 506, and a storage device 508. In one embodiment, computer system 502 is coupled to a display 513. Storage device 508 stores an advertiser-bidding application 516, an indeterminacy identification application 520, and a presentation opportunity identification application 522. During operation, advertiser-bidding application 516, indeterminacy identification application 520, and presentation opportunity identification application 522 are loaded from storage device 508 into memory 506, and executed by processor 504. Accordingly, processor 504 performs the aforementioned functions to facilitate a receptive-opportunity-based advertising system that identifies indeterminacy points in a customer's activities.

The methods and processes described in the detailed description section can be embodied as code and/or data, which can be stored in a computer-readable storage medium as described above. When a computer system reads and executes the code and/or data stored on the computer-readable storage medium, the computer system perform the methods and processes embodied as data structures and code and stored within the computer-readable storage medium.

Furthermore, the methods and processes described below can be included in hardware modules. For example, the hardware modules can include, but are not limited to, application-specific integrated circuit (ASIC) chips, field programmable gate arrays (FPGAs), and other programmable-logic devices now known or later developed. When the hardware modules are activated, the hardware modules perform the methods and processes included within the hardware modules.

## Claims

1. A computer implemented method for facilitating an activity-based advertisement system that identifies customer indeterminacy, the method comprising:
receiving a number of trajectories of a customer;
identifying an indeterminacy point based on the trajectory patterns;
determining one or more receptive opportunities for presenting advertisements based on the indeterminacy point; and
presenting one or more advertisements to the customer during a period corresponding to the receptive opportunity.

2. The method of claim 1, wherein a respective trajectory comprises a trace of a customer's location; and
wherein the trace indicates the time when the customer is at different locations and venues associated with different locations.

3. The method of claim 1, wherein identifying the indeterminacy point comprises:
determining a diverging point among the trajectories; and
determining whether the divergence among the trajectories at this diverging point is sufficiently uncertain and greater than a predetermined threshold.

4. The method of claim 3, further comprising:
identifying correlation between two or more diverging trajectories and other activities or context; and
excluding such correlated trajectories from being considered for the indeterminacy point.

5. The method of claim 1, wherein the indeterminacy point can correspond to different activity hierarchies.

6. The method of claim 1, further comprising receiving contextual information for the customer; and
wherein the identification of indeterminacy point is further based on the contextual information.

7. The method of claim 6, wherein the contextual information comprises one or more of:
time of day;
day of week;
speed of motion;
amount of time spent at the indeterminacy point;
weather condition;
content of the customer's calendar, messages, and emails;
accelerometer and/or gyroscope traces; and
traffic condition.

8. A computer-readable medium storing instructions which when executed by a computer cause the computer to perform a method for facilitating an activity-based advertisement system that identifies customer indeterminacy, the method comprising:
receiving a number of trajectories of a customer;
identifying an indeterminacy point based on the trajectory patterns;
determining one or more receptive opportunities for presenting advertisements based on the indeterminacy point; and
presenting one or more advertisements to the customer during a period corresponding to the receptive opportunity.

9. The computer-readable medium of claim 8, wherein a respective trajectory comprises a trace of a customer's location; and
wherein the trace indicates the time when the customer is at different locations and venues associated with different locations.

10. The computer-readable medium of claim 8, wherein identifying the indeterminacy point comprises:
determining a diverging point among the trajectories; and
determining whether the divergence among the trajectories at this diverging point is sufficiently uncertain and greater than a predetermined threshold.

11. The computer-readable medium of claim 10, wherein the method further comprises:
identifying correlation between two or more diverging trajectories and other activities or context; and
excluding such correlated trajectories from being considered for the indeterminacy point.

12. The computer-readable medium of claim 8, wherein the indeterminacy point can correspond to different activity hierarchies.

13. The computer-readable medium of claim 8, wherein the method further comprises receiving contextual information for the customer; and
wherein the identification of indeterminacy point is further based on the contextual information.

14. The computer-readable medium of claim 13, wherein the contextual information comprises one or more of:
time of day;
day of week;
weather condition;
speed of motion;
amount of time spent at the indeterminacy point;
content of the customer's calendar, messages, and emails;
accelerometer and/or gyroscope traces; and
traffic condition.

15. A computer system for facilitating an activity-based advertisement system that identifies customer indeterminacy, the computer system comprising:
a processor;
a memory;
a receiving mechanism configured to receive a number of trajectories of a customer;
an indeterminacy-identification mechanism configured to identify an indeterminacy point based on the trajectory patterns;
an receptive-opportunity-determination mechanism configured to determine one or more receptive opportunities for presenting advertisements based on the indeterminacy point; and
a communication mechanism configured to communicate one or more advertisements to the customer's mobile device during a period corresponding to the receptive opportunity.
